# EUROPÄISCHE PATENTANMELDUNG

(11) **EP 1 215 177 A1**
(43) Veröffentlichungstag der Anmeldung: **19.06.2002**
(21) Anmeldenummer: 01129466.7
(22) Anmeldetag: 11.12.2001
(51) Int. Cl.: C02F 1/66

(54) **Verfahren zur biologischen Abwasserreinigung**

(30) Priorität: 16.12.2000 DE 10062878
(71) Anmelder: MESSER GRIESHEIM GmbH, 65933 Frankfurt am Main (DE)
(72) Erfinder: Hermans, Monica, 41470 Neuss (DE)

(57) **Zusammenfassung**

Die Erfindung betrifft ein Verfahren zur biologischen Reinigung von Abwässern, bei dem das mit aeroben Mikroben versetzte Abwasser mittels eines sauerstoffhaltigen Gases mikrobiell gereinigt und anschließend nachgereinigt wird.

Erfindungsgemäß wird dadurch, daß Druckluft und Kohlendioxid in das Abwasser eingetragen werden, ein Ausfällen von Härtebildnern aus dem Belebtschlamm in das Abwasser und damit Kalkablagerungen an den Anlagenteilen der Abwasserreinigung verhindert, wodurch eine störungsfreie und kostengünstige biologische Abwasserreinigung mit hoher Leistung ermöglicht wird.

## Beschreibung

Die Erfindung betrifft ein Verfahren zur biologischen Reinigung von Abwässern, bei dem das mit aeroben Mikroben versetzte Abwasser mittels eines sauerstoffhaltigen Gases mikrobiell gereinigt und anschließend nachgereinigt wird.

Bei der biologischen Reinigung von Abwässern mit hoher Härte, wie beispielsweise von aus der altpapierverarbeitenden Industrie resultierenden Abwässern, werden durch den in das in der Regel biologisch oder mechanisch vorgereinigte und mit aeroben Mikroben versetzte Abwasser erfolgenden Drucklufteintrag und dem damit verbundene Anstieg des pH-Wertes des Abwassers die im Belebtschlamm enthaltenen Härtebildner, insbesondere Calcium- und Magnesiumsalze, ausgefällt. Der Abbau von in diesen Abwässern oftmals enthaltenen Fettsäuren oder anderen organischen Säuren führt zu eine das Ausfällen von Härtebildnern bewirkenden Erhöhung des pH-Wertes des Abwassers. Die somit in das Abwasser ausgefällten Härtebildner setzen sich als Ablagerungerungen an den Lufteintragsaggregaten und auch in dem von dem gereinigten Abwasser durchströmten Rohrleitungen und Anlagenteilen der Abwasserreinigung fest, wodurch deren Funktionsfähigkeit so beeinträchtigt wird, das die Leistung der Abwasserreinigung verringert wird und es in Härtefällen sogar zu einer Funktionsstörung bzw. zu einem Ausfall der Abwasserreinigung kommen kann.

Der Erfindung liegt daher die Aufgabenstellung zugrunde, ein Verfahren der eingangs beschriebenen Art zur Verfügung zustellen, mittels dem eine störungsfreie und kostengünstige Abwasserreinigung mit hoher Leistung ermöglicht wird.

Die Aufgabe wird erfindungsgemäß durch ein Verfahren mit den Merkmalen von Anspruch 1 gelöst.

Durch den erfindungsgemäßen, zusätzlich zur Druckluft erfolgenden Eintrag von technischem Kohlendioxid in das mikrobiell zu reinigende Abwasser wird ein Ausfällen der Ablagerungen auf und in den Anlagenteilen der Abwasserreinigung bewirkenden Härtebildnern, insbesondere von Calcium- und Magnesiumsalzen, aus dem Abwasser verhindert und damit eine störungsfreie und kostengünstige Abwasserreinigung mit hoher Leistung ermöglicht.

Das über den pH-Wert des Abwassers regelbare Einbringen des Kohlendioxids kann zusammen mit der Druckluft oder separat von der Druckluft in die Biologie und in den anderen von dem gereinigten Abwasser durchströmten Anlagenteilen, wie beispielsweise in der Nachreinigung, in Rohrleitungen und Behältern, erfolgen.

Es hat sich erwiesen, daß bereits ein Eintrag von mit mindestens 5 Vol.-% Kohlendioxid angereicherter Druckluft in das zu reinigende Abwasser den pH-Wert kleiner/gleich 7,5 erhält und ein Ausfällen von Härtebildnern aus dem Abwasser und damit die Bildung von **A**blagerungen in der Abwasserreinigung verhindert.

Ein weiterer wesentlicher Vorteil der erfindungsgemäßen biologischen Abwasserreinigung besteht darin, dass eine Dosierung von Mineralsäuren zur pH-Wert Verringerung nicht erforderlich ist und so eine Aufsalzung durch Chloride und Sulfaten vermieden wird. Dadurch ist das gereinigte Abwasser weniger korrosiv und besser für eine Wederverwendung, z.B. in der Produktion, geeignet

Falls gewünscht kann der pH-Wert des gereinigten Abwassers bei Wiederverwendung, z.B. in der Produktion, durch einfaches Strippen von Kohlendioxid gezielt erhöht werden, wodurch auch die Härtebildner gezielt aus dem Wasser ausgefällt und entfernt werden.

Der Eintrag von Kohlendioxid und Druckluft in das zu reinigende Abwasser kann problemlos und kostengünstig mittels aller herkömmlichen Eintragsaggregate für Gase in wässrigen Lösungen, wie beispielsweise Belüfter, Schlauchbegaser, PSB-Jet oder Oxidatoren, erfolgen.

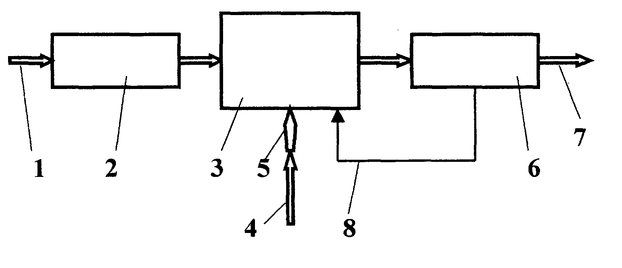

Nachfolgend wird die Erfindung anhand eines in der Zeichnung dargestellten Ausführungsbeispiels näher erläutert.

Dem als einzige Figur der Zeichnung dargestellten Verfahrensschema ist zu entnehmen, dass mit Schadstoffen belastetes, 30°C warmes Abwasser 1 mit pH-Wert 6,8 mit 400 m³/h einer Vorreinigung 2 einer biologischen Abwasserreinigung zugeführt wird. Das in der Vorreinigung 2 mechanisch von Grobstoffen befreite Abwasser wird einer der Vorreinigung 2 nachgeschalteten Belebung 3 zugeführt. In das in der Belebung 3 eingetragene und mit aeroben Mikroben versetzte Abwasser mit einem pH-Wert von 6,9 wird mit 5 Vol.-% technischem Kohlendioxid angereicherte Druckluft 4 mit 1500 m³/h mittels eines in der Belebung 3 installierten Belüfters 5 eingetragen. Auch am Ausgang der Belebung 3 weist das mikrobiell gereinigte Abwasser einen pH-Wert von 6,9 auf. Durch den in das mit aeroben Mikroorganismen versetzte Abwasser der Belebung 3 eingetragenen Sauerstoff werden die als Verunreinigungen in dem Abwasser enthaltenen Inhaltsstoffe durch die aeroben Mikroorganismen unter Aufbau von neuem Zellmaterial zu Wasser und Kohlendioxid umgewandelt. Das bei der mikrobiellen Abwasserreinigung entstehende Abgas entweicht über die Wasseroberfläche. Anschliessend wird das mikrobiell gereinigte Abwasser in einer der Belebung 3 nachgeschalteten Nachreinigung 6 mechanisch nachgereinigt.

Das nunmehr vollständig gereinigte Abwasser 7 wird aus der Anlage abgezogen und teilweise in der Produktion wiederverwendet. Der anfallende Belebtschlamm 8 wird zumindest teilweise wieder der Belebung 3 zugeführt

## Patentansprüche

1. Verfahren zur biologischen Reinigung von Abwässern, bei dem das mit aeroben Mikroben versetzte Abwasser mittels eines sauerstoffhaltigen Druckgases mikrobiell gereinigt und anschließend nachgereinigt wird, **dadurch gekennzeichnet, daß** Druckluft und Kohlendioxid in das Abwasser eingetragen werden.

2. Verfahren nach Anspruch 1, **dadurch gekennzeichnet, daß** zur mikrobiellen Reinigung des Abwassers vorzugsweise mit technischem Kohlendioxid versetzte Druckluft in das zu reinigende Abwasser eingetragen wird.

3. Verfahren nach Anspruch 2, **dadurch gekennzeichnet, daß** die Druckluft mit mindestens 5 Vol.-% technischem Kohlendioxid angereichert wird.

4. Verfahren nach einem der Ansprüche 1 bis 3, **dadurch gekennzeichnet, daß** die in das Abwasser eingetragene Menge an Kohlendioxid der aus dem Abwasser-Belebtschlammgemisch ausgetragenen Kohlendioxid-Menge entspricht.

5. Verfahren nach einem der Ansprüche 1 bis 4, **dadurch gekennzeichnet, daß** das Kohlendioxid und die Druckluft mittels unterschiedlich ausgebildeter und angeordneter Eintragssysteme in das zu reinigende Abwasser eingetragen werden.

6. Verfahren nach einem der Ansprüche 1 bis 5, **dadurch gekennzeichnet, daß** die in das zu reinigende Abwasser einzutragende Menge an Kohlendioxid über den pH-Wert des Abwassers geregelt wird.

7. Verfahren nach einem der Ansprüche 1 bis 6, **dadurch gekennzeichnet, daß** der Kohlendioxid-Eintrag in das mikrobiell gereinigte Abwasser bevorzugt nach der Belebung erfolgt.
